Europäisches Patentamt

**European Patent Office**

Office européen des brevets

(11) Numéro de publication: **0 292 401**
**A1**

(12) **DEMANDE DE BREVET EUROPEEN**

(21) Numéro de dépôt: **88401228.7**

(22) Date de dépôt: **20.05.88**

(51) Int. Cl.⁴: **A 01 K 57/00**
A 01 K 49/00, A 01 K 47/00

(30) Priorité: **20.05.87 FR 8707074**

(43) Date de publication de la demande:
**23.11.88 Bulletin 88/47**

(84) Etats contractants désignés:
**AT BE CH DE ES GB GR IT LI LU NL SE**

(71) Demandeur: **Mathieu, Norbert**
**97, rue Samuel de Champlain**
**F-76120 Grand Quevilly (FR)**

(72) Inventeur: **Mathieu, Norbert**
**97, rue Samuel de Champlain**
**F-76120 Grand Quevilly (FR)**

(74) Mandataire: **Bonnetat, Christian et al**
**Cabinet PROPI Conseils 23 rue de Léningrad**
**F-75008 Paris (FR)**

(54) **Procédé et dispositif pour le développement et l'élevage accéléré de colonies d'abeilles.**

㊲ L'invention concerne un procédé et un dispositif en vue de l'élevage accéléré et de la multiplication de colonies d'abeilles.

Selon l'invention on raccorde à une enceinte principale (1) constituant une ruche de départ une capacité intermédiaire (2) qui surplombe l'enceinte (1) et à laquelle sont raccordées des enceintes auxiliaires (3,9,10 et 11) communiquant avec la capacité intermédiaire (2) ; on place dans une première enceinte auxiliaire (3) des cadres à couvain jusqu'à développement de cellules royales ; on isole certaines de ces cellules qui sont placées dans les enceintes auxiliaires (9,10 et 11) avec des nouveaux cadres à couvain prélevés depuis la ruche principale (1) en permettant ainsi la formation presque simultanée et en tout cas très rapprochée de nouvelles colonies à partir d'une unité mère unique située dans la ruche (1)

Fig. 9

EP 0 292 401 A1

## Description

### Procédé et dispositif pour le développement et l'élevage accéléré de colonies d'abeilles.

La présente invention concerne un procédé, ainsi qu'un appareillage adapté à l'exploitation de ce procédé, en vue du développement et de l'élevage accéléré de colonies d'abeilles utilisables en apiculture ; le procédé permet notamment une multiplication rapide d'essaims indépendants dérivés d'une souche ou d'une origine unique, partant d'un essaim constituant la souche sélectionnée.

L'invention vise à permettre à une exploitation d'apiculture d'assurer, à partir d'une colonie unique, c'est-à-dire d'une seule et même reine, correspondant à une variété d'abeilles convenablement sélectionnée et adaptée notamment aux circonstances locales, de multiplier les essaims permettant ainsi de peupler un nombre important de ruches, ceci dans une période de temps extrêmement réduite et sans avoir besoin de faire appel à l'implantation de reines extérieures, en évitant ainsi la contamination d'une population locale et en assurant la pureté de la race ainsi sélectionnée.

Dans les techniques de développement et de multiplication des essaims, actuellement connus, on procède à la mise en place, au-dessus du corps de la ruche, d'un volume additionnel, lequel est suffisamment séparé du corps principal du rucher pour que l'odeur de la reine ne puisse être perceptible au niveau de ce volume additionnel, ce dernier étant séparé du corps principal par une grille qui isole ce volume additionnel et s'oppose au passage de la reine, poursuivant son oeuvre de ponte dans le rucher principal ; on place dans ce volume additionnel des cadres à couvain remplis d'oeufs, lesquels seront nourris par les abeilles (qui peuvent librement circuler du rucher principal jusqu'au volume additionnel).

Les abeilles travaillant dans le volume additionnel, n'ayant plus la perception olfactive de la reine vont engendrer spontanément le processus de mise en route d'une nouvelle reine affectée au futur essaim.

Cette méthode traditionnelle présente l'inconvénient d'être extrêmement lente et en outre elle présente des inconvénients au niveau de l'équilibre biologique de l'ensemble de la ruche, la thermo-régulation de l'ensemble ainsi créée étant difficilement assurée, de même que il est difficile d'assurer un équilibre dans l'alimentation des deux colonies jumelées pendant une période de temps correspondant au démarrage du nouvel essaim.

La présente invention vise à remédier à ces inconvénients et permet d'obtenir la multiplication des essaims et par conséquent la production de nouvelles populations d'abeilles autonomes, aptes chacune à peupler un nouveau rucher, ceci dans une période de temps extrêmement resserrée en permettant par conséquent, toujours en partant d'une unité mère unique, de disposer très rapidement et par conséquent assez tôt dans une saison de production, d'une pluralité (plusieurs dizaines) d'essaims arrivés rapidement à une étape productive et susceptible par conséquent d'assurer le peuplement d'un nouveau rucher.

A cet effet l'invention concerne un procédé de développement et d'élevage accéléré de colonies d'abeilles, utilisable en apiculture, et permettant notamment une multiplication très rapide d'essaims indépendants dérivés d'une origine unique, le procédé est caractérisé par la succession des opérations suivantes.

a) on raccorde à l'enceinte initiale (constituant la ruche principale), au moins une enceinte auxiliaire (dite ruchette d'élevage) communiquant avec l'enceinte principale en permettant le passage des abeilles d'une enceinte à l'autre et le positionnement des deux enceintes et leur passage commun étant tel que les abeilles en place dans l'enceinte auxiliaire ne puissent sentir par voie olfactive la présence de la reine et l'enceinte auxiliaire comporte en outre au moins une seconde ouverture de sortie et d'entrée des abeilles vers l'extérieur ;

b) on interpose entre les enceintes ainsi communiquantes une grille, dite grille à reine, s'opposant au passage d'une reine hors de son enceinte d'origine mais permettant le passage des abeilles ;

c) on place dans l'enceinte auxiliaire des plaques à alvéoles ou plaques à couvain (chaque alvéole étant garni d'un oeuf, lesdites plaques étant prelévées dans l'enceinte principale et constituant ainsi un second couvain nourri par l'ensemble des abeilles circulant dans les deux enceintes en communication ;

d) on place à proximité immédiate de l'enceinte auxiliaire une source de glucose pour la nourriture du nouvel essaim en formation ;

e) on laisse se développer dans l'enceinte auxiliaire le processus de génération de cellules royales devant donner naissance à autant de reines dont une seule survivra laquelle, après fécondation à l'extérieur, formera avec les abeilles nées dans l'enceinte auxiliaire, un nouvel essaim fille, ayant sa reine et vivant encore en symbiose alimentaire thermique et hygrométrique avec l'essaim initial ou essaim mère ;

f) on raccorde à l'enceinte initiale (constituant la ruche principale) ou à la première enceinte auxiliaire, au moins une nouvelle et seconde enceinte auxiliaire conformément aux paragraphes a) et b) ci-dessus ;

g) on place dans la seconde cellule auxiliaire des plaques à alvéoles ou plaques à couvains, garnis d'oeufs, prélevées dans la ruche principale ou éventuellement dans l'enceinte auxiliaire, en constituant ainsi un nouveau couvain nourri par les abeilles provenant tant de la ruche principale que de la première enceinte auxiliaire ;

h) on laisse se développer dans la nouvelle et seconde enceinte auxiliaire le processus de génération de cellules royales jusqu'à l'éclosion d'une nouvelle reine en reconstituant ainsi dans cette nouvelle cellule auxiliaire un nouvel essaim ;

i) on répète les opérations précédentes jusqu'à obtention d'un ensemble constituant une pluralité d'enceintes raccordées les unes aux autres, chacune possédant un essaim autonome avec sa reine, mais chaque essaim bénéficiant de l'apport nutritionnel et de la régulation thermique et hygrométrique des autres colonies éventuellement plus anciennes et mieux équilibrées ;

j) on sépare les enceintes auxiliaires lorsque l'essaim qui la peuple a acquis sa maturité bio et sociologique en permettant de peupler une nouvelle ruche.

On voit que dans le cadre de la mise en oeuvre de l'invention on peut par conséquent mettre en route au fur et à mesure, par branchement successif sur une ruche principale, des unités constituant autant de points de départ d'une nouvelle colonie, ceci en nombre pratiquement indéfini.

L'invention concerne également une forme de mise en oeuvre plus particulière et caractérisée par la succession des opérations suivantes.

a) on raccorde à une enceinte principale constituant une ruche initiale au moins une enceinte auxiliaire dite ruchette d'élevage communiquant avec la première en permettant le passage des abeilles mais en s'opposant au passage d'une reine, le positionnement des deux enceintes et leur passage commun étant tel que les abeilles en place dans l'enceinte auxiliaire ne puissent sentir par voie olfactive la présence de la reine, l'enceinte auxiliaire comportant une ouverture de sortie et d'entrée des abeilles vers l'extérieur ;

b) on place dans l'enceinte auxiliaire des plaques à alvéoles garnies d'oeufs, ou plaques à couvain, prélevées dans la ruche principale en constituant un second couvain nourri par les abeilles circulant dans l'ensemble des deux enceintes en communication ;

c) on place à proximité immédiate de la cellule auxiliaire une source de glucose propre à faciliter la nourriture du nouvel essaim en formation ;

d) on laisse se développer dans l'enceinte auxiliaire le processus de génération de nouvelles cellules royales et on isole, après fermeture des cellules royales, un certain nombre de ces dernières par exemple en plaçant chacune d'entre elles dans un mini panier dit "cage à reine" ;

e) on laisse une reine prendre possession après fécondation du nouvel essaim (fille) vivant en symbiose alimentaire thermique et hygrométrique avec l'essaim (mère) initial ;

f) on raccorde soit à l'enceinte initiale correspondant à la ruche principale, soit à l'enceinte auxiliaire contenant un nouvel essaim avec sa reine, une seconde enceinte auxiliaire dans laquelle sont introduits des cadres à couvain ;

g) et en même temps on met en place dans le nouveau couvain ainsi constitué au moins une cellule royale telle que prélevée précédemment selon e) ci-dessus au sein du couvain développé dans une enceinte auxiliaire précédente, cette cellule royale ainsi proche et la maturité permettant au nouveau couvain d'acquérir une reine, ceci en quelques jours, l'essaim en formation aboutissant ainsi rapidement à son autonomie tout en bénéficiant de l'apport nutritionnel et de l'effet de régulation thermique et hydrométrique provenant de sa symbiose et de sa communication avec les essaims disposés dans les enceintes voisines.

L'invention concerne encore un ensemble pour la mise en oeuvre du procédé selon les revendications qui précèdent et cet ensemble est caractérisé en ce qu'il comporte d'une part une enceinte principale et d'autre part une pluralité d'enceintes auxiliaires de type modulaire, toutes pourvues de moyens de raccordement mutuels par simple emboîtement d'un manchon venu d'une enceinte, apte à être engagée dans un alésage récepteur prévu sur l'enceinte voisine, chaque enceinte étant apte à recevoir intérieurement des cadres à couvain de type connu, ces cadres étant amovibles et étant ainsi aptes à être déplacés d'une enceinte vers l'autre.

D'autre caractéristiques et avantages de l'invention ressortiront de la description qui suit et qui est donnée en rapport avec une forme de réalisation présentée à titre d'exemples préférentiels et en se référant aux dessins annexés.

La figure 1 représente une vue d'une enceinte principale constituant une ruche de départ ou initiale.

La figure 2 représente la ruche initiale à laquelle est associée une capacité intermédiaire supérieure, elle-même raccordée à une enceinte auxiliaire latérale.

La figure 3 représente le dispositif de la figure 2 à une phase ultérieure schématisant la séparation des cellules royales prélevées depuis l'essaim en formation de l'enceinte auxiliaire.

La figure 4 représente la ruche initiale pourvue de sa capacité intermédiaire supérieure et à laquelle sont associées latéralement et de chaque côté deux enceintes auxiliaires soit quatre enceintes auxiliaires qui vont être chacune munies des grilles à couvain provenant de la ruche principale.

La figure 5 représente l'ensemble de la figure 4 schématisant l'introduction dans des enceintes auxiliaires de certaines des cellules royales antérieurement prélevées.

La figure 6 représente la mise en place au-dessus de la capacité intermédiaire d'une double enceinte auxiliaire pour la mise en route de nouveaux couvains.

La figure 7 représente le dispositif de la figure 6 schématisant la séparation des cellules royales depuis les nouveaux couvains de l'enceinte auxiliaire double supérieure.

Et la figure 8 représente la mise en route des enceintes auxiliaires raccordées aux enceintes doubles centrales schématisant en outre la mise en place des cadres à couvains dans ces enceintes auxiliaires ainsi que l'introduction des cellules royales.

La figure 9 représente une vue en perspective d'une forme de réalisation d'un dispositif en vue de la mise en oeuvre de l'invention selon une phase du développement du procédé.

Selon l'ensemble des figures on voit que l'on fait appel dans le cadre du procédé selon l'invention à une ruche 1 qui peut être une ruche conventionnelle mais qui sera de préférence constituée d'un corps sensiblement parallélépipèdique en matériau thermo-isolant par exemple en résine expansée et comportant sur au moins certaines et sur plusieurs de ses faces verticales des ouvertures sous forme d'alèsage aptes à permettre le raccordement sur la ruche soit d'accessoires, soit de capacités ou enceintes auxiliaires dans les conditions décrites ci-après.

Sur la ruche principale 1 est mise en place dans l'exemple ici décrit une capacité intermédiaire 2 constituant une "hausse" comportant également sur ses parois latérales des alèsages permettant ainsi le raccordement de l'enceinte auxiliaire 3 branchée et communiquant avec la capacité intermédiaire 2 par le manchon 4 venu de l'enceinte 3 et engagé dans un alèsage de dimensions convenables et prévu à cet effet sur la paroi de la capacité intermédiaire 2 avec mise en jeu d'organes de verrouillage par exemple des ergots à baïonnette.

On dispose dans la ruche principale 1 d'une colonie prospère et en plein développement dont la reine assure la production de plusieurs milliers d'oeufs par jour.

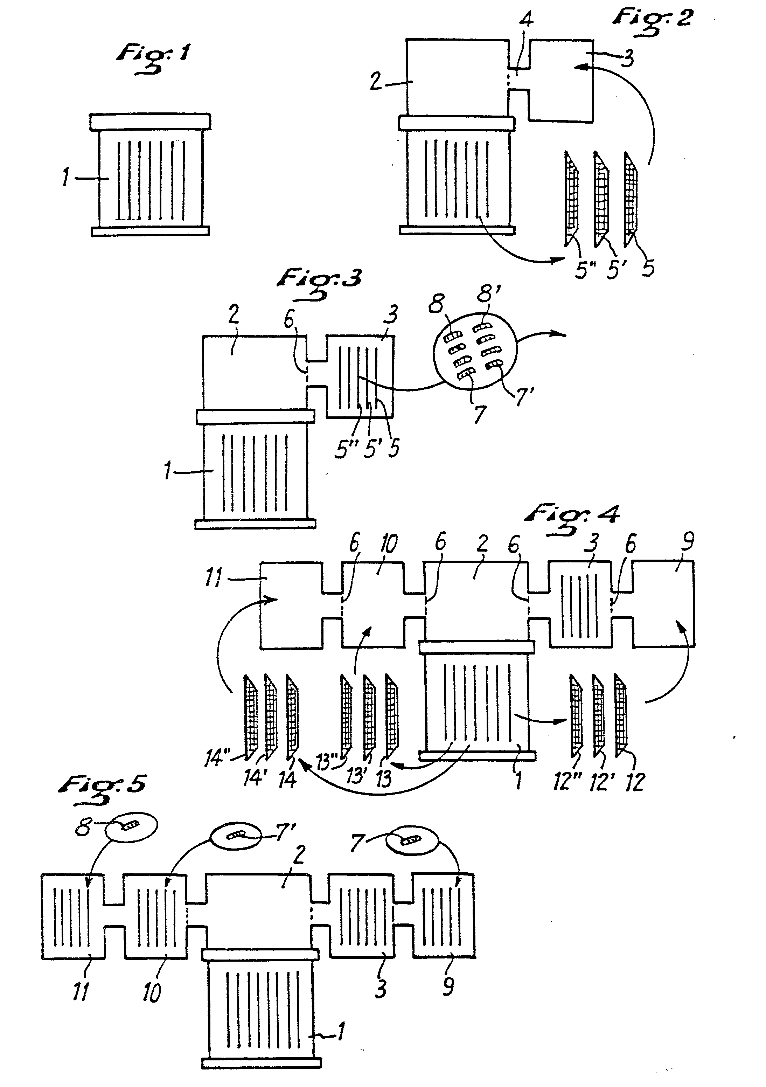

Il est donc facile de prélever des cadres 5,5',5" garnis d'oeufs et constituant donc des "cadres à couvain" retirés depuis la ruche principale selon la figure 2 et qui sont mis en place dans l'enceinte auxiliaire 3.

A cet effet et dans le cadre de l'invention les dimensions respectivement des enceintes principales 1 et auxiliaires 3 permettent le placement interchangeable et amovible des cadres 5,5',5".

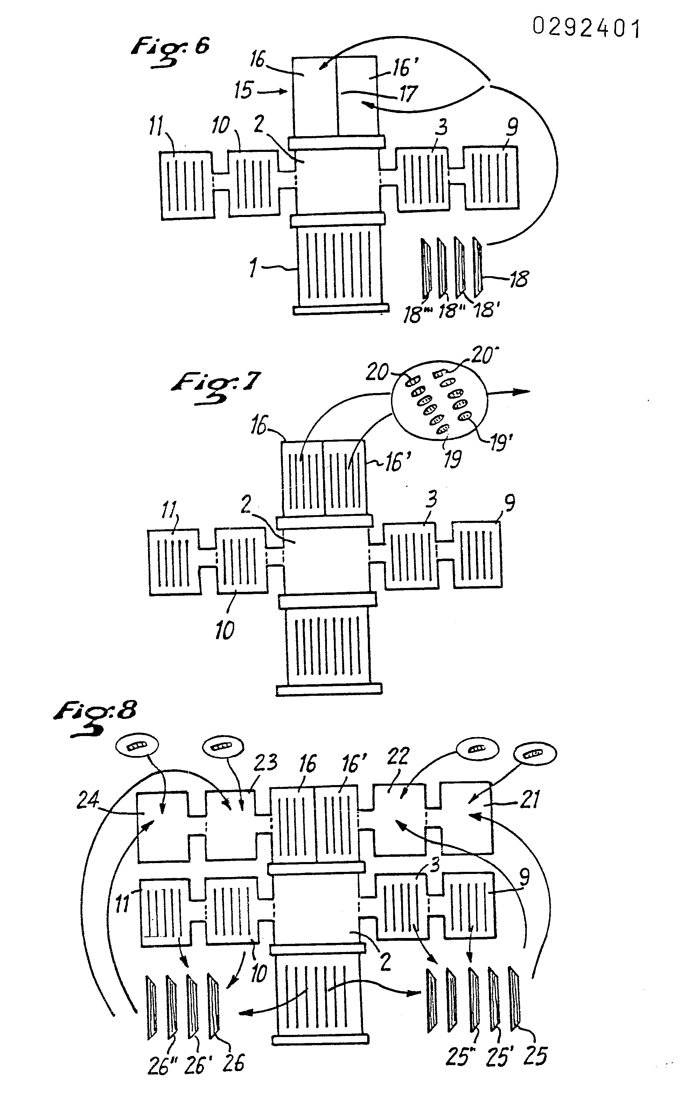

Ces derniers sont ainsi introduits selon la figure 3 et garnissent l'enceinte auxiliaire 3.

Cette dernière communique par le passage 4 avec la ruche principale 1, via la capacité intermédiaire 2 ; une grille 6 peut être interposée par exemple à l'entrée du passage 4, tout comme elle pourrait être positionnée entre la capacité 2 et la ruche principale 1 de façon à permettre le passage des abeilles mais à empêcher la libre circulation de la reine qui dessert la ruche principale 1.

Dans ces conditions les abeilles qui hantent la ruche principale sont appelées naturellement à assurer le service de la nourriture des jeunes sujets en cours de développement sur les cadres à couvain 5,5',5" et qui vont constituer l'essaim nouveau en formation.

Cependant la disposition de l'ensemble est telle que au sein de l'enceinte auxiliaire 3, les abeilles sont suffisamment éloignées de la reine pour en perdre le contact olfactif et elles ont alors le sentiment d'une unité sociologique dépourvue de reine ce qui va déclencher le processus naturel de sécrétion de la gelée royale dont les abeilles vont nourrir certains des sujets en développement sur les cadres à couvain.

De sorte qu'ainsi vont se trouver engendrées spontanément et selon les règles naturelles des cellules royales 7,7',8,8' etc...

Selon une caractéristique de l'invention lorsque les cellules royales (contenant chacune une future reine) sont suffisamment développées et sont refermées, une partie d'entre elles par exemple environ la moitié sont un chiffre compris entre 8 et 10, est prélevée depuis l'enceinte auxiliaire 3 pour être mise en réserve et à cet effet ces cellules sont insérées dans un mini panier dit "cage à reine" et de type connu.

Le développement de l'essaim en formation dans l'enceinte auxiliaire 3 va donc se poursuivre avec cependant une partie seulement des cellules royales qui permettront l'éclosion d'une reine, laquelle sera par conséquent élue en entraînant la destruction des reines tardives ; et la reine affectée à l'enceinte auxiliaire 3, après envol à l'extérieur et sa fécondation, reviendra habiter l'enceinte auxiliaire 3 où elle débutera rapidement son travail de ponte en garnissant par conséquent les plaques à alvéoles qui auront été introduites dans cette enceinte ; et l'on obtient ainsi au niveau de l'enceinte auxiliaire 3, dans un délai normal de l'ordre d'un mois un essaim au début de sa vie autonome mais complet et possédant sa reine pondeuse.

Cependant le processus de développement selon l'invention se poursuit et on peut immédiatement ensuite, en utilisant des enceintes auxiliaires 9,10 et 11, modulaires et identiques à l'enceinte 3, et qui sont raccordées comme on le voit sur la figure 4 respectivement sur l'enceinte 3 et du côté opposé sur la capacité intermédiaire 2, réaliser un ensemble intercommuniquant, chacune des enceintes pouvant recevoir indifféremment la visite des abeilles mais en empêchant, par le positionnement entre chaque enceinte et sa voisine d'une grille à reine 6, la libre circulation des reines (cet isolement étant indispensable à la paix intérieure au sein de chaque essaim).

L'opération de garnissage des enceintes 9,10 et 11 par des cadres à couvain respectivement 12,12',12",13',13" et 14,14',14", prélevée depuis la ruche principale 1, se poursuit alors comme précédemment décrit pour l'enceinte auxiliaire 3 ; on peut ainsi obtenir selon la figure 5 des enceintes auxiliaires 9,10 et 11 comportant chacune un essaim en formation et constitué essentiellement de cadres à couvain provenant toujours de la même reine unique de départ.

Selon une caractéristique originale de l'invention il n'est cependant pas nécessaire d'attendre pour cette seconde génération la fin du processus de développement naturel de la formation d'une nouvelle reine au sein de chacune des enceintes 9,10 et 11.

En effet les cellules royales 7,7',8,8' qui ont été mises en réserve et qui ne sont pas arrivées à maturité c'est-à-dire qui sont encore à un stade antérieur à l'éclosion de la reine, peuvent être introduites dans chacune des enceintes auxiliaires 9,10 et 11 en assurant ainsi la "fécondation" en ce qui concerne la formation d'une reine, de chacun des essaims en formation, sans attendre par conséquent l'éclosion des reines provenant de la génération spontanée c'est-à-dire du nourrissement de certains des sujets de ces couvains par la gelée royale secrétée spontanément par les abeilles constatant l'absence de reines dans chacune des enceintes où elles sont en cours de travail.

De façon connue, les cadres à couvain 12,12',12" etc... qui ont été prélevés dans la ruche principale 1 sont remplacés par des cadres vides lesquels seront rapidement remplis par la reine de la ruche principale poursuivant son travail.

On voit que selon l'invention il est possible dans un espace de temps très réduit et qui est en fait inférieur à un mois, on peut assurer la production non pas d'un, mais de quatre essaims (ou plus) dépendant et représentant une seconde génération par rapport à l'essaim "mère" de la ruche principale 1.

Le chiffre 4 n'est d'ailleurs pas caractéristique ni critique car il serait possible de raccorder dans une deuxième étape non pas trois enceintes auxiliaires mais quatre, cinq, six ou plus, la mise en place d'une enceinte auxiliaire n'étant limitée que par la possibilité de l'approvisionner en cadre à couvain garni provenant de la ruche mère 1.

Les figures 6,7 et 8 représentent une variante de mise en oeuvre de l'invention qui peut soit être initiée à titre principal, soit être suivie en séquence du processus décrit précédemment et illustré aux figures 1 à 5.

Selon la figure 6 on superpose sur la capacité intermédiaire 2 un volume sensiblement de la même section que la capacité intermédiaire 2 et que la ruche principale 1, ce volume 15 étant séparé en deux parties 16 et 16' constituant chacune une cellule auxiliaire permettant chacune le développement d'un nouvel essaim.

De préférence le volume 15 se superpose sur la capacité 2 de façon à ce que ses parois prolongent les parois extérieures verticales de la capacité 2.

La cloison intérieure 17 permet pour un même volume de doubler la production des essaims nouveaux mais on pourrait utiliser le volume 15 pour constituer une enceinte unique.

Les enceintes 16 et 16' séparées l'une de l'autre sont en outre séparées de la ruche inférieure 1 par une "grille à reine" qui empêhe la remontée éventuelle de la reine depuis son logement au sein de la ruche principale 1 vers les enceintes auxiliaires 16 et 16'.

On introduit alors dans les capacités 16 et 16' des cadres à couvain 18,18',18",18"' provenant (comme précédemment) de la ruche principale 1 où ils sont remplacés par des cadres vides bientôt garnis.

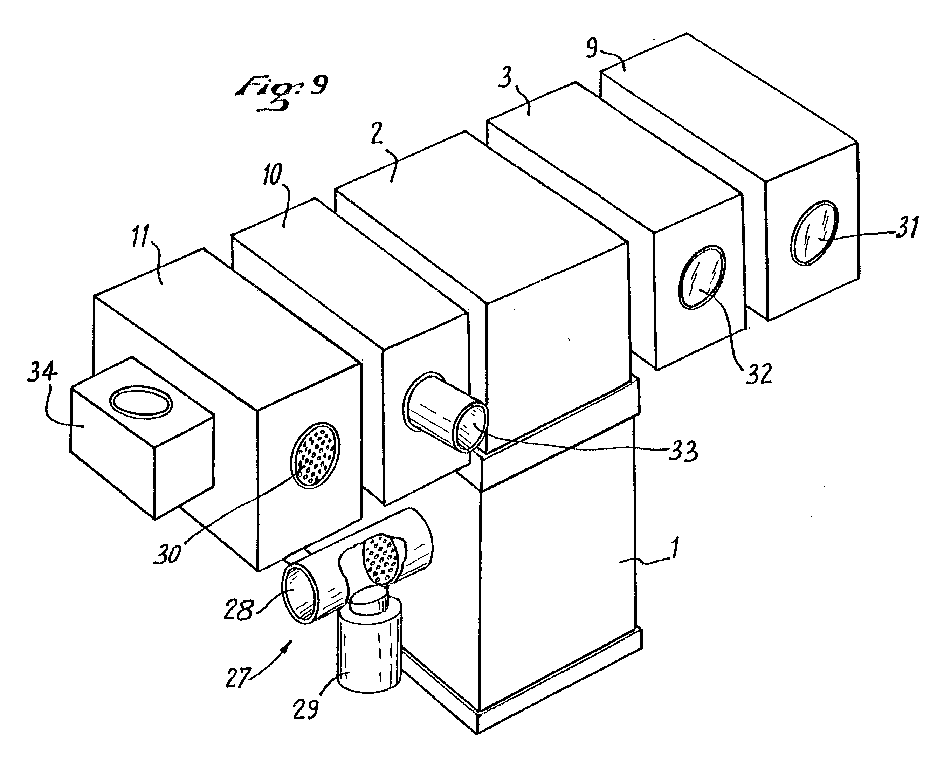

On voit à la figure 7 que le couvain dans les enceintes 16 et 16' permet donc rapidement la production de cellules royales selon le phénomène précédemment évoqué, les abeilles n'étant isolées olfactivement par rapport à la reine située trop bas, produisent alors la gelée royale dont certains sujets sont nourris donnant ainsi naissance aux cellules royales 19,19',20,20' susceptibles de donner chacune naissance à une future reine.

Cependant malgré ce prélèvement il subsiste suffisamment de cellules royales dans les enceintes auxiliaires 16 et 16' pour qu'une reine naisse rapidement et prenne possession de son domaine en éliminant ses rivales ; on obtient ainsi après fécondation de chacune des deux reines dans les deux enceintes 16 et 16' un essaim naissant qui va donc pouvoir se développer jusqu'à maturité, la nouvelle reine commençant rapidement son travail de ponte, tandis que le jeune essaim en développement bénéficie de la symbiose c'est-à-dire des sources d'alimentation de même que la régulation thermique et hygrométrique provenant de la communication des enceintes 16 et 16' avec les autres enceintes et notamment avec la ruche principale 1.

Le processus peut alors se poursuivre en raccordant sur les enceintes 16 et 16' les enceintes auxiliaires 21,22,23,24.

Ces dernières sont garnies comme précédemment évoquées des cadres à couvain 25,25',25" et 26,26',26", provenant de la ruche principale 1 où des essaims antérieurs situés dans les enceintes auxiliaires précédemment développées 3,9,10 et 11.

En même temps ou immédiatement après la mise en place des cadres à couvain (garnis d'oeufs) dans les enceintes 21,22,23 et 24, sont introduits dans ses enceintes les cages à reine contenant les cellules royales qui ont été prélevées au stade précédent et comme on l'a vu aux commentaires de la figure 7 ; ces cellules royales 19,19',20 et 20' permettent donc très rapidement à 4 nouveaux essaims de suivre pratiquement à quelques jours d'intervalle la formation des deux essaims situés dans les enceintes 16 et 16'.

De sorte que à la génération ultérieure ce sont six essaims nouveaux qui viennent donc s'ajouter en quelques jours aux quatre précédents (ces chiffres n'étant pas critiques et pouvant être accrus).

Alors cependant que ces essaims sont parfaitement homogènes et équilibrés et proviennent d'une souche unique c'est-à-dire d'une même reine en permettant ainsi d'obtenir une parfaite homogénéité dans le développement des colonies, en respectant notamment la pureté de la race et en bénéficiant de la sélection localement retenue en fonction des conditions du milieu.

L'invention permet donc ce résultat remarquable pour une exploitation d'apiculture, en partant d'une ruche unique sélectionnée, de permettre d'obtenir en quelques semaines un nombre d'essaims arrivés à maturation et donc proches de la période de production, en nombre de plusieurs dizaines.

Ainsi il est possible pour une exploitation d'apiculture en partant d'une unité qui à été sélectionné pour ses qualités, d'obtenir une multiplication des unités de production c'est-à-dire de créer un nombre d'essaims autonomes en très grand nombre, ceci en toute sécurité quant à la pureté de la race sélectionnée et en bénéficiant de conditions particulièrement favorables assurant une grande sécurité dans le développement des colonies et la santé des sujets, puisque les nouvelles colonies créées sont toutes maintenues en symbiose avec les autres sociétés et par conséquent elles bénéficient de la régulation nutritionnelle, thermique ou hygrométrique assurée spontanément par les autres colonies avec lesquelles elles restent en communication.

Et lorsque un nouvel essaim ou une nouvelle unité a atteint sa période de maturité permettant son indépendance et il est alors possible de la séparer de l'ensemble pour l'intégrer dans une ruche autonome.

L'invention concerne également un dispositif tel que précédemment évoqué et permettant la mise en oeuvre du procédé.

Et ce dispositif est constitué d'un ensemble comportant essentiellement une enceinte principale constituée de la ruche 1, et une pluralité d'enceintes auxiliaires notamment selon la figure 9 les enceintes 3,9,10 et 11 qui sont raccordées sur une capacité intermédiaire 2 surmontant la ruche inférieure 1.

On voit que les enceintes auxiliaires sont formées de volumes parallélépipédiques identiques entre eux et modulaires et ils comportent sur une de leurs grandes parois un manchon débordant vers l'extérieur.

Sur la face opposé l'enceinte comporte un alésage de dimensions et format permettant de recevoir le manchon de l'enceinte voisine.

De sorte que par emboîtement d'un manchon dans un alésage récepteur deux enceintes peuvent être jumelées et constituer ainsi par raccordement mutuel une batterie presque illimitée en nombre d'enceintes auxiliaires raccordées les unes aux autres.

Chaque manchon permet le passage des abeilles et il reçoit de préférence une grille comportant des perforations de forme et dimensions voulues s'opposant au passage d'une reine de façon à éviter toute interférence entre les essaims voisins.

Dans ces conditions on obtient bien un ensemble communiquant dans lequel l'équilibre nutritionnel hygrométrique et thermique peut être obtenu, les essaims momentanément déficitaires bénéficiant de l'apport des essaims voisins.

De sorte que sont ainsi créées les meilleures conditions de développement des nouvelles colonies jusqu'à leur phase de maturité.

Selon une autre caractéristique les enceintes auxiliaires comportent également sur leurs petits côtés des alésages permettant la mise en place d'accessoires susceptibles de desservir chaque enceinte et d'assurer le conditionnement de la vie intérieure de chaque enceinte.

Pareillement la ruche principale inférieure 1 comporte également sur certaines de ses faces des alésages tous identiques entre eux permettant par conséquent l'insertion et la mise en place d'accessoires.

Parmi ces accessoires figure, notamment à la lumière de la figure 9, un "piège à pollen" 27 constitué d'un manchon horizontal inséré par une extrémité dans un alésage récepteur de la ruche, au sein du manchon 28 est insérée une grille (non représentée) transversale que doivent traverser les abeilles ; et de façon connue en soi ce passage resserré oblige les abeilles à relâcher une partie du pollen qu'elles ont récoltée lequel tombe dans la cuve réceptrice 29.

Sur les alésages peut être également positionnée une grille 30 pourvue de perforations de calibre approprié permettant le passage des abeilles en vue de l'aération intérieure ; peuvent également être positionnés un obturateur à opercule 31 obturant par conséquent l'alésage ainsi neutralisé ; ou un obturateur formé d'une glace transparente 32 permettant par conséquent de surveiller la vie intérieure de l'enceinte ainsi affectée.

On peut également positionner sur l'alésage récepteur un manchon d'envoi 33 pourvu intérieurement d'une grille permettant le passage des abeilles et qui constituent ainsi un passage d'entrée et de sortie des abeilles desservant l'enceinte correspondante.

On voit enfin que on peut brancher et raccorder sur une enceinte auxiliaire par exemple sur l'enceinte 11 un "nourrisseur" formé ici d'une boîte ou capacité parallélépipédique 34 raccordée par un manchon de passage sur l'alésage correspondant du conteneur 11 le boîtier 34 contenant intérieurement sur son fond une nappe de liquide glucosé sur lequel sera positionnée une grille comportant des inégalités de relief, chaque inégalité de relief en creux définissant ainsi une pente permettant aux abeilles d'accéder à la nappe de liquide glucosé quel que soit le niveau de cette dernière.

On précisera que le dessin de la figure 9 représente une ruche complexe (à cinq enceintes et cinq reines) de façon à illustrer les différents types d'accessoire et ouvertures, sans préjuger des positionnements concrets de ceux-ci qui seront retenus en fonction des règles d'usage en apiculture ; notamment les ouvertures seront orientées de façon à éviter la dérive des reines au retour de leur vol de fécondation.

**Revendications**

1 - Procédé de développement et d'élevage accéléré de colonies d'abeilles, utilisable en apiculture, et permettant notamment une multiplication très rapide d'essaims indépendants dérivés d'une origine unique, le procédé est caractérisé par la succession des opérations suivantes.

a) on raccorde à l'enceinte initiale (constituant la ruche principale), au moins une enceinte auxiliaire (dite ruchette d'élevage) communiquant avec l'enceinte principale en permettant le passage des abeilles d'une enceinte à l'autre et le positionnement des deux enceintes et leur passage commun étant tel que les abeilles en place dans l'enceinte auxiliaire ne puissent sentir par voie olfactive la présence de la reine et l'enceinte auxiliaire comporte en outre au moins une seconde ouverture de sortie et d'entrée des abeilles vers l'extérieur ;

b) on interpose entre les enceintes ainsi communiquantes une grille, dite grille à reine, s'opposant au passage d'une reine hors de son enceinte d'origine mais permettant le passage des abeilles ;

c) on place dans l'enceinte auxiliaire des plaques à alvéoles ou plaques à couvain (chaque alvéole étant garni d'un oeuf), lesdites plaques étant prelévées dans l'enceinte principale et constituant ainsi un second couvain nourri par l'ensemble des abeilles circulant dans les deux enceintes en communication ;

d) on place à proximité immédiate de l'enceinte auxiliaire une source de glucose pour la nourriture du nouvel essaim en formation ;

e) on laisse se développer dans l'enceinte auxiliaire le processus de génération de cellules royales devant donner naissance à autant de reines dont une seule survivra laquelle, après fécondation à l'extérieur, formera avec les abeilles nées dans l'enceinte auxiliaire, un nouvel essaim fille, ayant sa reine et vivant encore en symbiose alimentaire thermique ou hygrométrique avec l'essaim initial ou essaim mère ;

f) on raccorde à l'enceinte initiale (constituant la ruche principale) ou à la première enceinte auxiliaire, au moins une nouvelle et seconde enceinte auxiliaire conformément aux paragraphes a) et b) ci-dessus ;

g) on place dans la seconde cellule auxiliaire des plaques à alvéoles ou plaques à couvains, garnis d'oeufs, prélevées dans la ruche principale ou éventuellement dans l'enceinte auxiliaire, en constituant ainsi un nouveau couvain nourri par les abeilles provenant tant de la ruche principale que de la première enceinte auxiliaire ;

h) on laisse se développer dans la nouvelle et seconde enceinte auxiliaire le processus de génération de cellules royales jusqu'à l'éclosion d'une nouvelle reine en reconstituant ainsi dans cette nouvelle cellule auxiliaire un nouvel essaim ;

i) on répète éventuellement les opérations précédentes jusqu'à obtention d'un ensemble constituant une pluralité d'enceintes raccordées les unes aux autres, chacune possédant un essaim autonome avec sa reine, mais chaque essaim bénéficiant de l'apport nutritionnel et de la régulation thermique et hygrométrique des autres colonies éventuellement plus anciennes et mieux équilibrées ;

j) on sépare les enceintes auxiliaires lorsque l'essaim qui la peuple a acquis sa maturité bio et sociologique en permettant de peupler une nouvelle ruche.

2 - Procédé selon la revendication 1, caractérisé en ce qu'on superpose sur l'enceinte principale constituant la ruche d'origine, une capacité intermédiaire communiquant avec l'enceinte principale et sensiblement de même dimension en section que cette dernière, les parois verticales de cette capacité intermédiaire prolongeant celles de l'enceinte principale, et on raccorde latéralement sur cette capacité intermédiaire une ou plusieurs enceintes auxiliaires, lesdites enceintes auxiliaires étant ainsi étagées au même niveau que ladite capacité intermédiaire en étant en communication avec cette capacité avec interposition d'une "grille à reine" permettant le passage des abeilles mais s'opposant au passage d'une reine.

3 - Procédé selon la revendication 2, caractérisé en ce qu'on superpose sur ladite capacité intermédiaire une troisième enceinte de même section et dont les parois prolongent en hauteur celles de ladite capacité et de la ruche de base, ladite enceinte étant divisée par une cloison intérieure de façon à définir en réalité deux enceintes auxiliaires chacune communiquant, avec interposition d'une grille à reine, permettant le passage des abeilles, avec l'enceinte principale et chacune comportant également une ouverture vers l'extérieur.

4 - Procédé selon l'une des revendications 1,2 ou 3, caractérisé en ce qu'on raccorde latéralement plusieurs enceintes auxiliaires situées ainsi à un même étage et communiquant entre elles par un passage traversant deux parois verticales adjacentes appartenant à deux enceintes voisines.

5 - Procédé selon l'une des revendications 1,2,3 ou 4, caractérisé par la succession des opérations suivantes.

a) on raccorde à une enceinte principale constituant une ruche initiale au moins une enceinte auxiliaire dite ruchette d'élevage communiquant avec la première en permettant le passage des abeilles mais en s'opposant au passage d'une reine, le positionnement des deux enceintes et leur passage commun étant tel que les abeilles en place dans l'enceinte auxiliaire ne puissent sentir par voie olfactive la présence de la reine, l'enceinte auxiliaire comportant une ouverture de sortie et d'entrée des abeilles vers l'extérieur ;

b) on place dans l'enceinte auxiliaire des plaques à alvéoles garnies d'oeufs, ou plaques à couvain, prélevées dans la ruche principale en constituant un second couvain nourri par les abeilles circulant dans l'ensemble des deux enceintes en communication ;

c) on place à proximité immédiate de la cellule auxiliaire une source de glucose propre à faciliter la nourriture du nouvel essaim en formation ;

d) on laisse se développer dans l'enceinte auxiliaire le processus de génération de nouvelles cellules royales et on isole, après fermeture des cellules royales, un certain nombre de ces dernières par exemple en plaçant chacune d'entre elles dans un mini panier dit "cage à reine" ;

e) on laisse une reine prendre possession après fécondation du nouvel essaim (fille) vivant en symbiose alimentaire thermique et hygrométrique avec l'essaim (mère) initial ;

f) on raccorde soit à l'enceinte initiale correspondant à la ruche principale, soit à l'enceinte auxiliaire contenant un nouvel essaim avec sa reine, une seconde enceinte auxiliaire dans laquelle sont introduits des cadres à couvain ;

g) et en même temps on met en place dans le nouveau couvain ainsi constitué au moins une cellule royale telle que prélevée précédemment selon e) ci-dessus au sein du couvain développé dans une enceinte auxiliaire précédente, cette cellule royale ainsi proche de la maturité permettant au nouveau couvain d'acquérir une reine, ceci en quelques jours, l'essaim en formation aboutissant ainsi rapidement à son autonomie tout en bénéficiant de l'apport nutritionnel et de l'effet de régulation thermique et hygrométrique provenant de sa symbiose et de sa communication avec les essaims disposés dans les enceintes voisines.

6 - Procédé selon l'une des revendications 1 à 6,
caractérisé en ce que la mise en place d'une nouvelle enceinte et son retrait par rapport à l'ensemble se fait sans opération traumatisante sur les sujets des colonies, tels que enfumage, le raccordement et la séparation d'une nouvelle enceinte se faisant par simple emboîtement mécanique d'une unité assemblée à sa voisine.

7 - Procédé selon l'une des revendications 1 à 5,
caractérisé en ce qu'on met en communication deux essaims appartenant à deux enceintes voisines pour les réunir afin d'obtenir une colonie unique renforcée et à cet effet on retire la grille à reine séparant les deux enceintes, une seule reine (la plus vigoureuse) devant subsister de l'affontement entre les deux reines correspondant aux deux essaims.

8 - Procédé selon l'une des revendications 1 à 7,
caractérisé en ce qu'on utilise des enceintes modulaires comportant des moyens de raccordement mutuel permettant de constituer ainsi une batterie d'enceinte dont chaque unité est en communication avec les autres en constituant un ensemble et en permettant le passage des abeilles dans l'ensemble des enceintes, tout en isolant les reines et en assurant ainsi l'homogénéité thermique et hygrométrique du milieu ambiant.

9 - Dispositif pour la mise en oeuvre du procédé selon les revendications 1 à 8 qui précèdent et cet ensemble est caractérisé en ce qu'il comporte d'une part une enceinte principale (1) et d'autre part une pluralité d'enceintes auxiliaires de type modulaire (2,3,9,10), toutes pourvues de moyens de raccordement mutuels par simple emboîtement d'un manchon (4) venu d'une enceinte, apte à être engagée dans un alèsage récepteur prévu sur l'enceinte voisine, chaque enceinte étant apte à recevoir intérieurement des cadres à couvain (5,5',5") de type connu, ces cadres étant amovibles et étant ainsi aptes à être déplacés d'une enceinte vers l'autre.

10 - Dispositif selon la revendication 9,
caractérisé en ce que chaque enceinte modulaire auxiliaire (2,3,9,10,11) est formée d'une volume de forme générale parallélépipèdique creux comportant sur deux faces opposées d'un côté un manchon de raccordement (4) formant passage de section convenable, compris entre 5 et 20 cms, de préférence circulaire, et sur l'autre côté un premier alèsage récepteur dudit manchon en permettant l'engagement du manchon voisin venu de l'enceinte adjacente et verrouillable par des moyens de blocage approprié sur ledit alèsage.

11 - Dispositif selon la revendication 9 ou la revendication 10,
caractérisé en ce que chaque enceinte (principale ou auxiliaire) comporte en outre un second alèsage (de préférence identique au premier alèsage récepteur d'un manchon de communication) ce second alèsage étant apte à recevoir par emboîtement le raccordement d'au moins un organe auxiliaire.

12 - Dispositif selon la revendication 11,
caractérisé en ce que le second alèsage est apte à recevoir un accessoire constituant une trémie d'alimentation (34) apte à être raccordée par un passage de communication avec l'espace intérieur de l'enceinte correspondante, la base de la trémie formant un fond récepteur d'une nappe de liquide glucosé et étant munie d'une grille pourvue d'inégalités de surface en creux permettant aux abeilles d'arriver à proximité convenable de la nappe du liquide quelle que soit la hauteur de ce dernier.

13 - Dispositif selon l'une des revendications 9 à 12,
caractérisé en ce qu'il comporte des organes accessoires tels que un obturateur (31) apte à occulter un premier ou un second alèsage, un manchon grillagé (30) permettant la sortie et la rentrée des abeilles, un manchon (28) muni d'une grille transversale surplombant une capacité (29) en position inférieure et constituant une "trappe à pollen" (27).

0292401

Fig:1

Fig:2

Fig:3

Fig:4

Fig:5

Fig. 6

Fig. 7

Fig. 8

0292401

0292401

Fig. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C- 920 757 (BRÄUNLEIN) --- | | A 01 K 57/00 A 01 K 49/00 A 01 K 47/00 |
| A | DE-C- 71 928 (LANGDON) --- | | |
| A | DE-A-3 327 965 (SCHUSTER) ----- | | |

| DOMAINES TECHNIQUES RECHERCHES (Int. Cl.4) |
|---|
| A 01 K |

Le présent rapport a été établi pour toutes les revendications

| Lieu de la recherche | Date d'achèvement de la recherche | Examinateur |
|---|---|---|
| LA HAYE | 03-08-1988 | VON ARX V.U. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                

& : membre de la même famille, document correspondant

EPO FORM 1503 03 82 (P0402)